# EUROPÄISCHE PATENTSCHRIFT

(11) **EP 2 585 192 B1**
(45) Veröffentlichungstag und Bekanntmachung des Hinweises auf die Patenterteilung: **19.02.2020**
(21) Anmeldenummer: 11727126.2
(22) Anmeldetag: 22.06.2011
(51) Int. Cl.: B01D 39/08, B01D 39/16

(54) **VERFAHREN ZUR HERSTELLUNG EINES FILTERMATERIALS FÜR FLUIDE**
METHOD FOR PRODUCING A FILTER MATERIAL FOR FLUIDS
PROCÉDÉ DE FABRICATION D'UN MATÉRIAU FILTRANT POUR FLUIDES

(30) Priorität: 23.06.2010 DE 102010025219
(43) Veröffentlichungstag der Anmeldung: 01.05.2013
(73) Patentinhaber: Hydac Filtertechnik GmbH, 66280 Sulzbach/Saar (DE)
(72) Erfinder: SCHWENDER, Matthias, 66459 Kirkel (DE); SCHMITZ, Andreas, 66459 Kirkel (DE); KOCH, Edwin, 66636 Tholey (DE)
(74) Vertreter: Bartels und Partner, Patentanwälte
(86) Internationale Anmeldenummer: PCT/EP2011/003079
(87) Internationale Veröffentlichungsnummer: WO 2011/160829

(56) Entgegenhaltungen:
- EP-A2- 0 324 601
- DE-A1- 10 144 867
- DE-A1-102004 054 245
- US-A- 4 433 024
- US-A- 4 948 639
- US-A- 5 306 534

## Beschreibung

Die Erfindung betrifft ein Verfahren zur Herstellung eines Filtermaterials mit den Verfahrensschritten im Oberbegriff von Anspruch 1.

Filtermaterialien zur Herstellung von austauschbaren Filterelementen in hydraulischen Anlagen sind in mannigfacher Ausgestaltung bekannt und bestehen beispielsweise aus einem Filtervlies, vorzugsweise mehrlagig, mit einer Stützstruktur auf einer oder beiden Seiten (Anström- oder Abströmseite). Solche Filterelemente werden von einer zu filtrierenden Hydraulikflüssigkeit durchströmt, wobei sich von der Rohseite zu der Reinseite eine zum Teil beträchtliche Druckdifferenz ergibt. Um dieser Druckdifferenz und auch dynamischen Strömungskräften in dem Unfiltrat standhalten zu können, weisen die Filtermaterialien, aus denen entsprechende Filterelemente gefertigt sind, sogenannte Stützstrukturen auf. Solche Stützstrukturen unterliegen einer starken Druckwechselbelastung im Betrieb eines Filterelements und sind meistens aus Metallgeweben, insbesondere Geweben aus Edelstahldrähten, gebildet.

Aus EP 1 436 062 B1 ist ein Filterelement für Flüssigkeiten, insbesondere für Hydraulikflüssigkeiten, mit einem Filtermaterial der eingangs genannten Art bekannt geworden. Das Filtermaterial umfasst ein Filtermedium mit einer das Filtermedium in Bezug auf die Durchströmrichtung des Filterelements zumindest reinseitig abstützenden gitterförmigen Stützstruktur, wobei die Stützstruktur aus einem Kunststoffmaterial gefertigt ist und elektrisch leitfähige Elemente aufweist. Die Stützstruktur ist als Stützgewebe aus Metall- und Kunststofffäden ausgebildet und liegt flächig an dem Filtermedium an. Das Filtermedium und das flächig anliegende Stützgewebe bzw. die Stützstruktur sind sternförmig aufgefaltet.

Ein weiteres Filtermaterial für Fluide sowie ein Verfahren nach dem Oberbegriff von Patentanspruch 12 sind aus DE 200 13 839 U1 bekannt geworden. Das bekannte Filtermaterial ist ein textiler Verbundwerkstoff, welcher teilweise aus elektrisch leitfähigem Material besteht und wenigstens eine durch quer zueinander angeordnete Fäden gebildete Stützlage und wenigstens eine durch ein aufgenadeltes Faservlies gebildete Faserauflage enthält. Die Stützlage bzw. Stützstruktur ist als Gewebe oder Gelege ausgebildet, wobei ein Teil der Fäden des Gewebes aus einem elektrisch leitfähigen Material, vorzugsweise aus Metall, gebildet ist. Die übrigen Fäden sind aus einem Kunststoffmaterial gebildet, ebenso wie das das Filtermedium bildende Faservlies selbst. Zur Durchführung des Nadelungsprozesses wird die Einstichtiefe zweckmäßigerweise so gewählt, dass die Nadeln durch das Faservlies vollständig durchstechen. Die Einstichdichte beträgt typischerweise 800 Einstiche pro cm². Die Verbindung der beiden Lagen mittels Vernadelung ist aufwendig und folglich kostenintensiv.

Die US 5 306 534 beschreibt ein Verfahren zur Herstellung eines Filtermaterials für Fluide, insbesondere für Hydraulikflüssigkeiten, wobei ein zumindest eine Lage aufweisendes Filtermedium auf zumindest einer Seite in Flächenbereichen mit einer teilweise aus einem Kunststoffmaterial gebildeten Stützstruktur flächig verbunden wird, wobei das Filtermedium und die Stützstruktur mittels Laminieren untereinander verbunden werden.

Weitere Filtermaterialien gehen aus der US 4 948 639, der EP 0 324 601 A2, der US 4 433 024, der DE 101 44 867 A1 und der DE 10 2004 054 245 A1 hervor.

Ausgehend von diesem Stand der Technik liegt der Erfindung die Aufgabe zugrunde, ein Verfahren bereit zu stellen, durch welches ohne Einschränkung seiner Funktionalität und Stabilität ein Filtermaterial in einfacher und kostengünstiger Weise bereit- bzw. hergestellt werden kann.

Diese Aufgabe wird durch ein Verfahren zur Herstellung eines Filtermaterials für Fluide nach Patentanspruch 1 gelöst.

Gemäß dem Kennzeichen von Anspruch 1 ist vorgesehen, dass die Stützstruktur als eine Beschichtung auf das Filtermedium auflaminiert wird und dass die Stützstruktur in einem Tauchverfahren oder in einem Rakelverfahren auf das Filtermedium aufgebracht wird, wobei bei dem Tauchverfahren eine Maske auf das Filtermedium aufgelegt und dieses anschließend in ein Bad mit Kunststoff enthaltendem Material für die Stützstruktur eingetaucht wird und bei dem Rakelverfahren die Stützstruktur ausbildenden Elemente in einem Muster auf das Filtermedium aufgebracht werden.

Die Stützstruktur wird als eine Beschichtung auf das Filtermedium auflaminiert. Auf diese Weise wird eine dauerhaft feste Verbindung der Filtermateriallagen geschaffen, was eine höhere Festigkeit bei geringerer Materialstärke der Stützstruktur erlaubt. Das so gebildete Filtermaterial mit ein- oder beidseitig auf ein Filtermedium, insbesondere ein Filtervlies, aufgebrachter Stützstruktur ist zu Filterelementen weiterverarbeitbar, welche eine sehr gute Formstabilität auch bei wechselnden Druckbelastungen aufweisen. Das Filtermedium und die Stützstrukturen können zunächst als separate Materiallagen hergestellt und anschließend miteinander verbunden werden. Die Stützstruktur kann jedoch auch in einem Arbeitsgang ausgebildet und mit dem Filtermedium verbunden werden. Der Druck zum Festlegen der Stützstruktur auf dem Filtermedium kann beispielsweise über eine Walze aufgebracht werden. Die Stützstruktur kann in einem Tauchverfahren auf das Filtermedium aufgebracht werden. Hierbei wird eine Maske auf das Filtermedium aufgelegt und dieses anschließend in ein Bad mit Kunststoff enthaltendem Material für die Stützstruktur eingetaucht. Die Freiräume der Maske werden entsprechend der auszubildenden Stützstruktur mit Kunststoffmaterial gefüllt, welches nach dem Auftauchen aushärtet und verfestigt und auf diese Weise die Stützstruktur in unmittelbarer Verbindung mit dem Filtermedium ausbildet. Zur Aushärtung bzw. Verfestigung der Stützstruktur kann zusätzlich eine Erwärmung oder Abkühlung durchgeführt werden. Überschüssiges Material kann mit einer Rakel abgetragen werden.

Weiter kann die Stützstruktur in einem Rakelverfahren auf das Filtermedium aufgebracht werden. Beim Rakelverfahren werden die die Stützstruktur ausbildenden Elemente, wie die Fadenelemente eines Gitters bzw. eines Gewebes, in einem bevorzugt gleichmäßigen Muster auf das Filtermedium aufgebracht. Alternativ kann die vorgefertigte Stützstruktur, insbesondere teilweise verfestigt bzw. ausgehärtet, mittels einer Trägerwalze auf das Filtermedium flächig aufgelegt und mit diesem verbunden werden.

Dadurch, dass das Filtermedium und die Stützstruktur mittels Laminieren, untereinander verbunden sind bzw. werden, wird eine Verbindung zwischen der zumindest einen Lage des Filtermediums und der Stützstruktur einfach ausgebildet und sowohl die Festigkeit der Stützstruktur als auch eine gute, dauerhafte Verbindung von Filtermedium und Stützstruktur sichergestellt. Die verbesserte und steifere Abstützung führt zu einem verbesserten Differenzdruckverhalten des Filtermaterials in einem Filterelement sowie zu einer verbesserten Kollapsstabilität. Die flächig miteinander verbundenen Einzellagen des Filtermaterials sind wesentlich formstabiler als herkömmliche Materialien, wodurch ein Verzug in eine Raumrichtung weitgehend vermieden wird.

Ein weiterer Vorteil ist die dünne Ausbildung des mittels Lamineren hergestellten Filtermaterials. Insbesondere ist dieses dünner als die Einzellagen, so dass durch Ausbildung von zusätzlichen Falten eine größere Filterfläche in einem Filterelement ausgebildet werden kann und folglich der zur Verfügung stehende Einbauraum besser zur Filtration ausgenutzt wird. Die verbesserte Drainagefunktion der miteinander verbundenen Filtermateriallagen führt zu einem niedrigeren Differenzdruck und folglich zu einem verbesserten Betriebsverhalten eines mit dem Filtermaterial bestückten Filterelementes.

Bei einer Ausgestaltung des Filtrermaterials, das nicht Teil der vorliegenden Erfindung ist, haften am Filtermedium zumindest bereichsweise in einem Sprühauftrag aufgetragene Klebepunkte an, welche insbesondere in unterschiedlicher Größe und/oder unregelmäßiger Anordnung vorgesehen Die Klebepunkte und/oder eine am Filtermedium vorgesehene zusätzliche Beschichtung können zumindest einige der von der Stützstruktur vorgegebenen Durchtrittsöffnungen für Fluid jeweils teilweise umgrenzen. Auf diese Weise wird die Fluiddurchlässigkeit des Filtermediums nicht nachteilig tangiert und folglich dessen Filtrationsfähigkeit trotz der aufgebrachten Stützstruktur im Wesentlichen beibehalten. Ein derart ausgestaltetes Filtermaterial findet insbesondere Verwendung für Feinfilterelemente. Durch den Sprühauftrag des Klebstoffs wird einerseits eine über die Fläche des Filtermediums gleichmäßig feste Klebeverbindung zwischen der Stützstruktur und dem Filtermedium sowie eine zusätzliche Aussteifung des Filtermediums bei geringstmöglicher Beeinträchtigung der Fluiddurchlässigkeit der mit Filtermedium belegten Durchtrittsöffnungen erreicht.

Das Material der Stützstruktur kann Polybutylenterephthalat- (PBT), Polypropylen- (PP) und/oder Polyethylen- (PE) Kunststoff umfassen. Derartige Kunststoffmaterialien zeichnen sich durch eine mittlere Festigkeit, eine hohe Steifigkeit und Härte aus. Teilkristalline Polyetylenterephthalate (PET) weisen thermische Einsatzgrenzen bei -20 °C bis etwa + 100 °C, kurzzeitig bis + 200 °C, auf. Sie sind beständig gegen verdünnte Säuren, aliphatische und aromatische Kohlenwasserstoffe, Öle, Fette, Esther und Alkohole. Polybutylenterephthalat besitzt im Vergleich zu Polyetylenterephthalat eine etwas geringere Festigkeit; seine Einsatzgrenzen liegen etwa bei -40 °C bis +250 °C. Isotaktisches Polypropylen ist bis etwa + 150 °C einsetzbar und erweist sich als chemisch sehr beständig.

Die Stützstruktur des Filtermaterials kann als Gitter oder Gewebe ausgebildet sein. Durch eine gitter- bzw. rasterförmige Anordnung von Fadenelementen wird eine gleichmäßige, über die Fläche des Filtermaterials homogene Formstabilität und Filtrationscharakteristik erreicht.

Bevorzugterweise variiert die Dicke der das Gitter bzw. Gewebe bildenden Fadenelemente über die Fläche des Filtermaterials, insbesondere wenn die Fadenelemente in Schussrichtung eine andere Dicke als die Fadenelemente in Kettrichtung aufweisen. Durch eine Ausbildung als Gitter bzw. Gewebe werden gute Festigkeitseigenschaften und eine gute Fluiddurchlässigkeit realisiert; durch eine Verwendung von unterschiedlich dicken Fadenelementen wird die von Fluid durchströmbare Durchtrittsfläche weiter vergrößert.

Die Dicke der Fadenelemente in Schussrichtung beträgt bevorzugterweise 250 µm und in Kettrichtung bevorzugterweise 200 µm. Weiter ist es vorteilhaft, dass die Maschenweite des Gitters bzw. des Gewebes 850 µm ^{∗} 1200 µm beträgt. Bei einer derartigen Dimensionierung weist das durch die Fadenelemente ausgebildete Stützgitter bzw. Stützgewebe gute Festigkeitseigenschaften und zugleich eine größtmögliche Fluiddurchtrittsfläche, mit anderen Worten eine hohe Fluiddurchlässigkeit, auf. In Abhängigkeit von der Maschenweite bewirkt die Stützstruktur eine Grobfiltration für Partikel, deren Abmessungen die Maschenweite überschreiten.

Zudem kann in die Stützstruktur zumindest ein elektrisch leitfähiges Linienelement eingearbeitet sein, wobei das zumindest eine elektrisch leitfähige Linienelement bevorzugt metallfrei ausgebildet ist und/oder Carbon enthält. Besonders bevorzugt ist das elektrisch leitfähige Linienelement als Bi-Komponentenfaser mit einer mit Carbon beschichteten Kunststofffaser ausgebildet.

Das die eigentliche Filtration bewirkende Filtermedium ist als Vlies, bevorzugt als Kunststoffvlies, besonders bevorzugt als Polyestervlies, ausgebildet. Das Material des Filtermediums umfasst bevorzugterweise Polybutylenterephthalat- (PBT), Polypropylen- (PP) und/oder Polyethylen- (PE) Kunststoff. Weiter ist es denkbar, dass das laminierte Vlies leitfähig ausgestattet ist, um die elektrostatischen Eigenschaften des Filtermaterials zu verbessern.

Das Filtermedium und die Stützstruktur sind vollflächig miteinander verbunden. Auf diese Weise wird ein ungewünschtes, die Stütz- und Filtrationswirkung beeinträchtigendes Auseinanderliegen bzw. eine Distanzierung von Filtermedium und Stützstruktur in nicht miteinander verbundenen Flächenbereichen beim bestimmungsgemäßen Gebrauch des Filtermaterials, beispielsweise beim pliseeartigen Auffalten, vermieden.

In einer Variante des Verfahrens, das nicht Teil der vorliegenden Erfindung ist, wird die Stützstruktur in einem Klebeverfahren auf das Filtermedium aufkaschiert. Hierbei können entsprechend den Anforderungen an das Filtermaterial Stützstrukturen unterschiedlichster Gestalt und Ausbildung auf ein Filtermedium aufgebracht werden. Insbesondere können Ausbildung und Auftrag der Stützstruktur in einem Arbeitsgang vorgenommen werden, d. h., ein Klebeeigenschaften aufweisendes Kunststoffmaterial wird entsprechend der gewünschten Stützstruktur auf das Filtermedium aufgebracht und härtet anschließend aus. Durch die Art und die Ausrichtung der Kunststofffäden bzw. -fasern sowie die Wahl des Kunststoffmaterials lassen sich anforderungsabhängig Stützstrukturen mit bestimmten Stütz- und Filtrationseigenschaften ausbilden.

Klebstoff kann in einem Trägerauftrag auf das Filtermedium aufgebracht werden. Hierbei wird Klebstoff nicht unmittelbar, beispielsweise durch eine Düse, auf das Filtermedium aufgebracht, sondern zunächst auf einen Träger, wie eine Trägerwalze, und anschließend auf das Filtermedium. Hieraus ergibt sich der Vorteil, dass die Trägerstruktur zunächst auf einem Träger ausgebildet wird, teilweise aushärtet und auf Fehler überprüft werden kann, bevor sie auf das Filtermedium aufgeklebt bzw. aufkaschiert wird.

Klebstoff kann in einem Sprühauftrag auf das Filtermedium aufgebracht werden. Beim Aufsprühen von Klebstoff werden tröpfchenartige Klebepunkte am bzw. auf dem Filtermedium ausgebildet. Die Klebepunkte bewirken bei einer Anlage der Stützstruktur eine Klebeverbindung zwischen Filtermedium und Stützstruktur. Die nicht zum Kleben verwendeten, in Durchtrittsbereichen der Stützstruktur liegenden Klebepunkte bzw. Klebetröpfchen führen zu einer Verstärkung des vliesartigen Filtermediums, wobei der Fluiddurchtritt und die räumliche Verformbarkeit des Filtermediums kaum beeinflusst werden. Alternativ oder zusätzlich zu den Klebepunkten aus Klebstoff kann eine zusätzliche Beschichtung auf das Filtermedium aufgebracht werden, wobei die Klebepunkte und/oder die Beschichtung vorteilhafterweise derart auf das Filtermedium aufgebracht werden, dass zumindest einige der von der Stützstruktur vorgegebenen Durchtrittsöffnungen für Fluid jeweils teilweise umgrenzt oder überdeckt werden.

Weiter kann eine Klebelage auf das Filtermedium und/oder die Stützstruktur aufgebracht werden. Hierbei wird die gesamte Anlagefläche zwischen Stützstruktur und Filtermedium als Verbindungs- bzw. Klebefläche genutzt, wodurch eine gute Verbindung zwischen beiden Materiallagen sichergestellt wird. Dies ist insbesondere dann wichtig, wenn die Stützstruktur im Vergleich zu den Durchtrittsbereichen dünne Fadenelemente aufweist.

Ein selbstklebender, das Filtermedium mit der Stützstruktur verbindender Klebstoff, insbesondere ein Hotmelt-Klebstoff, kann eingesetzt werden. Hierbei kann ein zusätzliches Erhitzen des Klebstoffs zum Ausbilden einer Klebeverbindung entfallen, so dass das Verfahren in einfacher Weise durchgeführt werden kann.

In einer weiteren Variante des Verfahrens, das nicht Teil der vorliegenden Erfindung ist, wird die Stützstruktur in einem thermischen Aufschmelzverfahren, insbesondere in einem Ultraschallverfahren auf das Filtermedium aufgebracht. Beim Ultraschallschweißen werden mechanische Schwingungen unter Druck auf Kunststoffteile übertragen. Durch Molekular- und Grenzflächenreibung entsteht Wärme, die den Dämpfungskoeffizienten des Materials anwachsen und den Kunststoff örtlich erweichen lässt. Diese Reaktion beschleunigt sich von selbst, da wegen der Zunahme des Dämpfungsfaktors des plastifizierten Materials ein größerer Anteil der Schwingungsenergie in Wärme umgesetzt wird. Nach Beendigung der Schalleinleitung ist eine kurze Abkühlphase unter dem noch anstehenden Fügedruck notwendig, um das zuvor plastifizierte Material homogen zu verfestigen. Danach sind die nun mit Hilfe der Ultraschallenergie verbundenen Materiallagen weiter verarbeitbar. Das schnelle und gezielte Aufschmelzen der Materialien wird durch geeignete Schweißgeometrien wie Spitzen, Kanten oder Rotierungen in Fügezonen oder auf Sonotrode oder Amboss erreicht. Durch den geringen Energiebedarf der Ultraschallverschweißung werden die Teile nur geringfügig thermisch belastet. Die Grundeigenschaften der zu verschweißenden Materialen ändern sich durch den Einsatz von Ultraschall nicht. Eine hohe Prozessgeschwindigkeit und das gleichzeitige Durchführen von Arbeitsschritten, wie Ultraschallschweißen, Schneiden und/oder Aufrollen oder Auffalten ermöglicht effektive Herstellungsprozesse.

Weiter kann die Stützstruktur in einem chemischen Aufschmelzverfahren auf das Filtermedium aufgebracht werden. Darüber hinaus sind physikalische Aufschmelzverfahren, insbesondere Adhäsionsverfahren, zur Verbindung von Stützstruktur und Filtermedium denkbar. Besonders bevorzugt werden Polyvinylsilikone zur Ausbildung des Kunststoffgitters bzw. der Stützstruktur eingesetzt.

Zur Erläuterung des Hintergrundes der Erfindung ist in der Zeichnung ein Filtermaterial gezeigt. Die in den Figuren gezeigten Merkmale sind rein schematisch und nicht maßstäblich zu verstehen. Es zeigen:

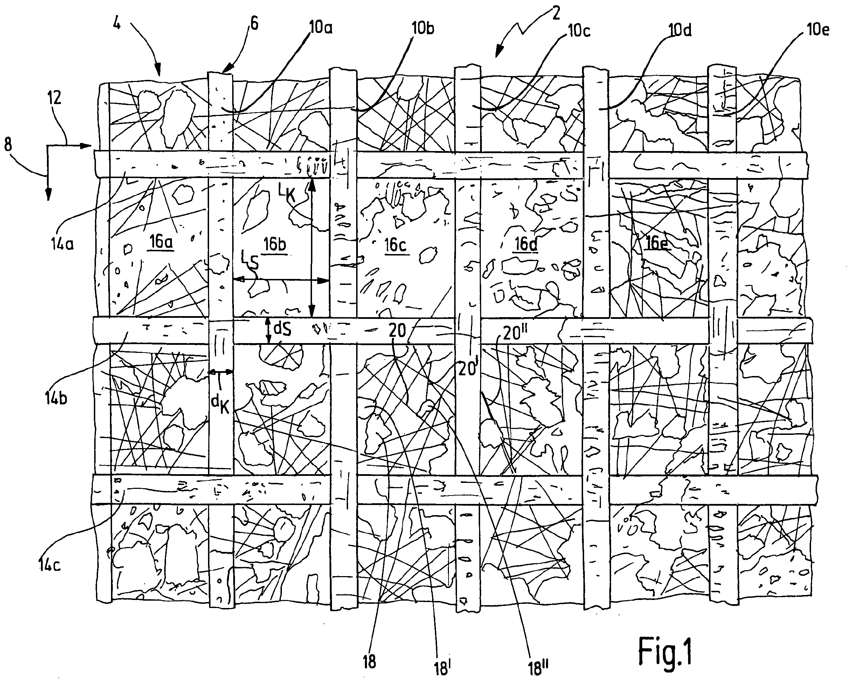

- Fig. 1 bis 4: jeweils eine vergrößerte Draufsicht auf einen Flächenabschnitt eines Beispiels eines Filtermaterials.

Die Fig. 1 bis 4 veranschaulichen keinen Verfahrensschritt eines Anspruches.

Fig. 1 zeigt einen rechteckförmigen Abschnitt eines Filtermaterials 2, welches flächenförmig und mehrlagig aus einem Filtermedium 4 und einer Stützstruktur 6 aufgebaut ist. Das Filtermedium 4 ist aus einem Kunststoffvlies in einer Lage hergestellt. Die Stützstruktur 6 umfasst in einer Kettrichtung 8 verlaufende Fadenelemente 10a, 10b, 10c, 10d, 10e und in eine Schussrichtung 12 verlaufende weitere Fadenelemente 14a, 14b, 14c auf. Die Fadenelemente 10a, 10b, ..., 14a, 14b, ... bilden ein regelmäßiges Gewebe aus, wobei in der Art einer sogenannten Leinwandbindung die Fadenelemente 10a, 10b, ..., 14a, 14b, ... jeweils abwechselnd an Kreuzungsstellen über und dann wieder unter dem nächsten Fadenelement 10a, 10b, ..., 14a, 14b, ... verwebt sind. Die Fadenelemente 10a, 10b, ..., 14a, 14b, ... weisen im Wesentlichen die gleiche Dicke d_{S}, d_{K} auf. Die Werte für d_{K} betragen beispielsweise 246 µm und 262,4 µm; die Werte für d_{S} betragen beispielsweise 252,6 µm und 242,8 µm. Darüber hinaus sind die gruppenweise parallel zueinander verlaufenden Fadenelemente 10a, 10b, ..., und 14a, 14b, ... jeweils äquidistant zueinander angeordnet, woraus sich eine gleichförmige Maschenweite der zwischen den Fadenelementen 10a, 10b, ..., 14a, 14b, ... angeordneten Durchtrittsöffnungen 16a, 16b, 16c, 16d, 16e, ... ergibt. Die Maschenweite des die Stützstruktur 6 bildenden Gewebes ist mit L_{S} ^{∗} L_{K} bezeichnet und beträgt beispielsweise 869,3 µm ^{∗} 1243,3 µm für Durchtrittsöffnung 16b; 862,8 µm ^{∗} 1217,1 µm für Durchtrittsöffnung 16c; 908,7 µm ^{∗} 1233,5 µm für Durchtrittsöffnung 16d.

Das Material der Stützstruktur 6 ist PBT-Kunststoff, welcher auf das als Polyestervlies ausgebildete Filtermedium 4 in einem Kaschiervorgang aufgetragen worden ist. Hierbei ist zunächst in einem Sprühauftrag Klebstoff auf das Filtermedium 4 aufgetragen bzw. aufgesprüht worden, so dass sich tröpfchenförmige Klebepunkte 18, 18', 18", ... in unterschiedlicher Größe ausbilden und in unregelmäßiger Anordnung am Filtermedium 4 anhaften. Anschließend wird die zunächst als separate Materiallage ausgebildete Stützstruktur 6 auf das Filtermedium 4 aufgelegt bzw. aufgedrückt, wodurch an den zwischen den Fadenelementen 10a, 10b, ..., 14a, 14b, ... und den Vliesfäden 20, 20', 20", ... des Filtermediums 4 liegenden Klebepunkten 18, 18', 18", ... eine Klebeverbindung ausgebildet und das mehrlagige Filtermaterial 2 fertig gestellt wird. Durch den Sprühauftrag des Klebstoffs wird einerseits eine über die Fläche des Filtermediums 4 gleichmäßig feste Klebeverbindung zwischen der Stützstruktur 6 und dem Filtermedium 4 sowie eine zusätzliche Aussteifung des aus Polyestervlies hergestellten Filtermediums 4 bei geringst möglicher Beeinträchtigung der Fluiddurchlässigkeit der mit Filtermedium 4 belegten Durchtrittsöffnungen 16a, 16b, ... erreicht.

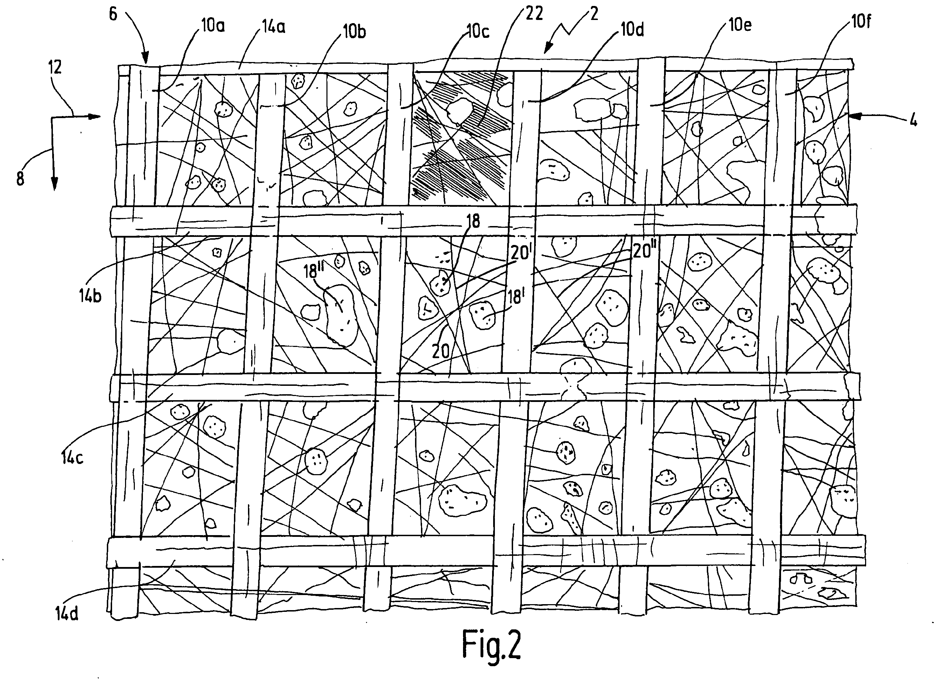

Das in Fig. 2 dargestellte Filtermaterial 2 unterscheidet sich von den aus Fig. 1 dadurch, dass das Filtermedium 4 eine zusätzliche Beschichtung 22, durch welche die Vliesfäden 20, 20', 20" des Filtermediums 4, genauer deren Zwischenräume, großteils verschlossen sind. Die Beschichtung 22 ist exemplarisch in einem Durchtrittsbereich zwischen den Fadenelementen 10c, 10d, 14a, 14b gezeigt, erstreckt sich jedoch über das gesamte Filtermedium 4. Auf diese Weise ist die Fluiddurchlässigkeit des Filtermediums 4 verringert und folglich dessen Filtrationsfähigkeit verbessert. Die im Sprühauftrag aufgetragenen Klebepunkte 18, 18', 18", ... sind ebenfalls gut zu erkennen. Das in Fig. 2 gezeigte Filtermaterial 2 findet insbesondere Verwendung für Feinfilterelemente. Die Fadenelemente 10a, 10b, ..., 14a, 14b, ... der gewebsartigen Stützstruktur 6 verlaufen gruppenweise parallel zueinander und kreuzen sich unter einem rechten Winkel. Es sind jedoch auch parallelogrammartige, insbesondere rautenförmige Ausgestaltungen der gewebsartigen Stützstruktur 6 denkbar.

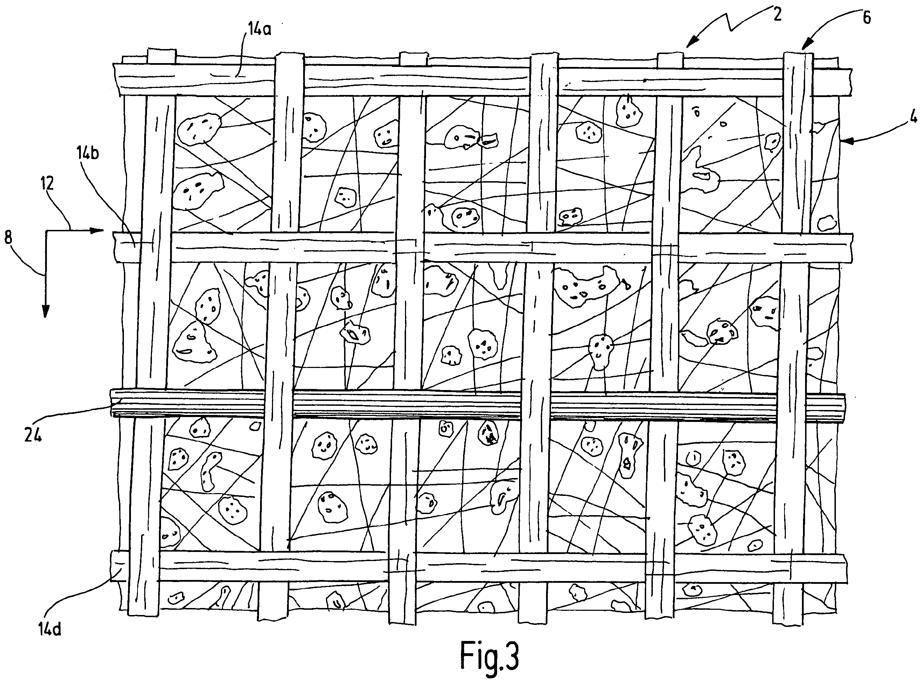

In Fig. 3 ist ein Beispiel mit einem in die gewebsartige Stützstruktur 6 eingewobenen, als Carbon-Faden ausgebildeten elektrisch leitfähigen Faden 24 gezeigt. Durch den elektrisch leitfähigen Faden 24 werden die elektrostatischen Eigenschaften des Filtermaterials 2 verbessert und dieses mechanisch verstärkt. Der eingewebte leitfähige Faden 24 kann, wie in Fig. 3 gezeigt, in Schussrichtung 12 verlaufen, jedoch ist auch eine Anordnung in Kettrichtung 8 denkbar. Er kann, wie in Fig. 3 gezeigt, ein reguläres Fadenelement 14c ersetzen, jedoch auch zusätzlich eingearbeitet sein. Insbesondere können weitere (nicht gezeigte) elektrisch leitfähige Fäden in die Stützstruktur 6 eingearbeitet sein.

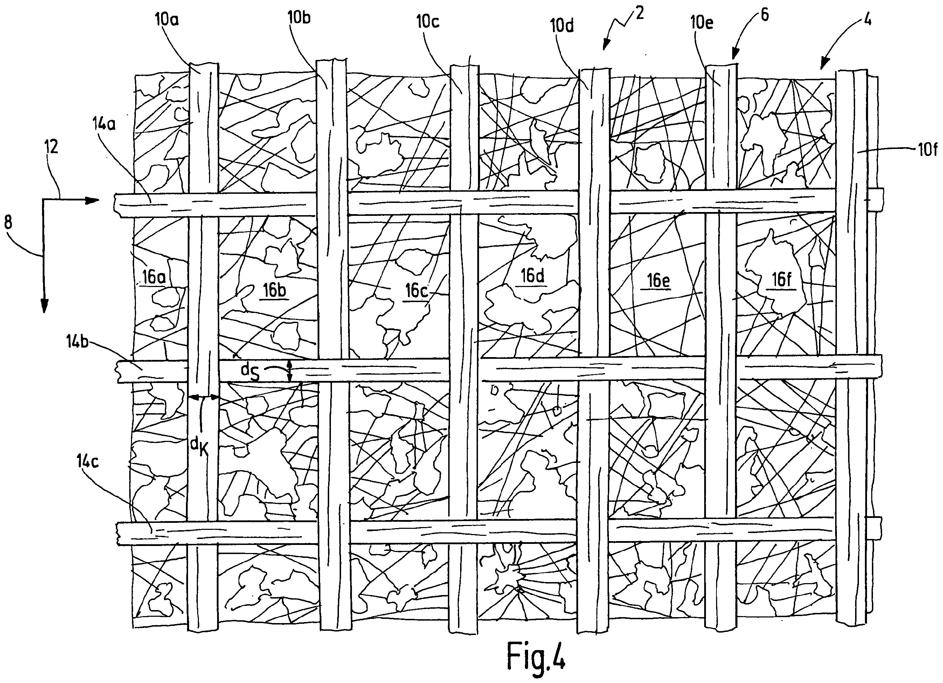

Während bei den in den Fig. 1 bis 3 gezeigten Beispielen die Dicke der Fadenelemente 10a, 10b, ..., 14a, 14b, ... jeweils im Wesentlichen gleich ist und ca. 250 µm beträgt, ist in Fig. 4 ein Filtermaterial 2 mit unterschiedlich dicken Fadenelementen 10a, 10b, ..., 14a, 14b, ... gezeigt. Die in Kettrichtung 8 verlaufenden Fadenelemente 10a, 10b, ... weisen eine Dicke d_{K} von ca. 250 µm, wie 262,4 µm, 252,6 µm und 259,2 µm, auf. Die in Schussrichtung 12 verlaufenden weiteren Fadenelemente 14a, 14, ... weisen einen Durchmesser bzw. eine Dicke ds von ca. 200 µm auf, wie 193,6 µm und 200,1 µm. Hieraus ergeben sich größere Durchtrittsöffnungen 16a, 16b, ... und folglich eine verbesserte Fluiddurchlässigkeit der Stützstruktur 6 bzw. des gesamten Filtermaterials 2.

## Patentansprüche

1. Verfahren zur Herstellung eines Filtermaterials (2) für Fluide, insbesondere für Hydraulikflüssigkeiten, wobei ein zumindest eine Lage aufweisendes Filtermedium (4) auf zumindest einer Seite in Flächenbereichen mit einer teilweise aus einem Kunststoffmaterial gebildeten Stützstruktur (6) flächig verbunden wird, wobei das Filtermedium (4) und die Stützstruktur (6) mittels Laminieren untereinander verbunden werden, **dadurch gekennzeichnet, dass** die Stützstruktur (6) als eine Beschichtung auf das Filtermedium (4) auflaminiert wird und dass die Stützstruktur (6) in einem Tauchverfahren oder in einem Rakelverfahren auf das Filtermedium (4) aufgebracht wird, wobei bei dem Tauchverfahren eine Maske auf das Filtermedium aufgelegt und dieses anschließend in ein Bad mit Kunststoff enthaltendem Material für die Stützstruktur eingetaucht wird und bei dem Rakelverfahren die Stützstruktur ausbildenden Elemente in einem Muster auf das Filtermedium aufgebracht werden.

2. Verfahren nach Anspruch 1, **dadurch gekennzeichnet, dass** auf das Filtermedium (4) eine zusätzliche Beschichtung (22) aufgebracht wird.

## Claims

1. Method for producing a filter material (2) for fluids, in particular hydraulic fluids, wherein a filter medium (4) having at least one layer is joined in flat areas on at least one side surface to a supporting structure (6) which is partially made from a plastics material, the filter medium (4) and the supporting structure (6) being joined by means of lamination, **characterised in that** said supporting structure (6) is laminated as a coating (6) on the filter medium (4) and **in that** the supporting structure (6) is applied to the filter medium (4) by a dipping method or spread coating method, wherein, in the dipping method, a mask is placed on the filter medium and this is then dipped in a bath with material containing plastic for the supporting structure and, in the spread coating method, the elements forming the supporting structure are applied to the filter medium in a pattern.

2. Method according to claim 1, **characterised in that** an additional coating (22) is applied to the filter medium (4).

## Revendications

1. Procédé de production d'un matériau (2) filtrant pour des fluides, notamment des liquides hydrauliques, dans lequel on relie, suivant une surface, un milieu (4) filtrant ayant au moins une couche sur au moins une face dans des parties de surface, à une structure (6) d'appui, en partie en une matière plastique, le milieu (4) filtrant et la structure (6) d'appui étant reliés entre eux au moyen d'un laminage, **caractérisé en ce que** l'on lamine la structure (6) d'appui sous la forme d'un revêtement sur le milieu (4) filtrant et **en ce que** l'on dépose la structure (6) d'appui suivant un procédé d'immersion ou suivant un procédé à la racle sur le milieu (4) filtrant, dans lequel, dans le procédé d'immersion, on applique un masque au milieu filtrant et on l'immerge ensuite dans un bain ayant du matériau contenant de la matière plastique pour la structure d'appui et, dans le procédé à la racle, on dépose de éléments formant la structure d'appui suivant un motif sur le milieu filtrant.

2. Procédé suivant la revendication 1, **caractérisé en ce que** l'on dépose un revêtement (22) supplémentaire sur le milieu (4) filtrant.
